(19) Europäisches Patentamt
European Patent Office
Office européen des brevets

(11) **EP 3 062 455 A1**

(12) **DEMANDE DE BREVET EUROPEEN**

(43) Date de publication:
**31.08.2016 Bulletin 2016/35**

(51) Int Cl.:
*H04J 11/00* ^(2006.01)    *H04W 36/00* ^(2009.01)

(21) Numéro de dépôt: **16156172.5**

(22) Date de dépôt: **17.02.2016**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**MA MD**

(30) Priorité: **24.02.2015 FR 1551569**

(71) Demandeur: **Commissariat à l'Énergie Atomique et aux Énergies Alternatives**
**75015 Paris (FR)**

(72) Inventeurs:
• **CALVANESE STRINATI, Emilio**
 **38000 GRENOBLE (FR)**
• **DE MARI, Matthieu**
 **77350 LE MEE SUR SEINE (FR)**

(74) Mandataire: **Brevalex**
 **95, rue d'Amsterdam**
 **75378 Paris Cedex 8 (FR)**

(54) **PROCÉDÉ DE PRISE DE DÉCISION D'UN TRANSFERT DE COMMUNICATION DANS UN CONTEXTE INTERFÉRENTIEL INTRA-BANDE**

(57)     L'invention porte sur un procédé d'adaptation de liaison pour système de télécommunication comprenant un terminal émetteur (T1), un premier terminal récepteur (R1) et au moins un second terminal récepteur (R2), une communication du terminal émetteur avec le premier terminal récepteur étant soumise à une première interférence due à au moins une communication avec l'au moins un second terminal récepteur qui utilise les mêmes ressources de transmission, le procédé comprenant :
- la détermination d'un premier schéma de modulation et de codage pour la communication du terminal émetteur (T1) avec le premier terminal récepteur (R1) qui optimise une fonction d'intérêt,
- pour chaque second terminal récepteur (R2), la détermination d'un second schéma de modulation et de codage qui optimise la fonction d'intérêt sous l'hypothèse que la communication du terminal émetteur (T1) est transférée du premier terminal récepteur (R1) vers le second terminal récepteur (R2) tout en étant soumise à une seconde interférence due à au moins une communication qui utilise lesdites mêmes ressources de transmission ;
- la sélection, parmi le premier terminal récepteur (R1) et l'au moins un second terminal récepteur (R2), du terminal récepteur permettant d'optimiser au mieux la fonction d'intérêt pour assurer la communication avec le terminal émetteur.

FIG.1

**Description**

**DOMAINE TECHNIQUE**

Le domaine de l'invention est celui des systèmes de télécommunication cellulaire. L'invention concerne plus particulièrement un mécanisme de prise de décision d'un transfert *(handover)* de communication dans un contexte interférentiel intra-bande.

**ÉTAT DE LA TECHNIQUE ANTÉRIEURE**

Un des problèmes affectant une communication au sein d'un système de télécommunication cellulaire est celui de l'interférence générée par les autres communications de la cellule ou des cellules voisines. On distingue classiquement l'interférence inter-cellulaire due aux communications des cellules voisines et l'interférence intra-cellulaire due aux communications de la même cellule où se trouve le terminal.

De nombreuses techniques ont été proposées et mises en oeuvre pour éviter ou réduire l'interférence intra-cellulaire. La plupart de ces techniques reposent sur une allocation de ressources de transmission orthogonales, par exemple d'intervalles de temps de transmission (TDMA), de fréquences de transmission (FDMA), d'intervalles de sous-porteuses d'un multiplex OFDM (OFDMA), de codes de transmission (CDMA), de faisceaux de transmission (SDMA), voire d'une combinaison de telles ressources, de manière à séparer les différentes communications d'une même cellule.

Les ressources de transmission étant rares, celles-ci sont généralement réutilisées, au moins partiellement, d'une cellule à l'autre. Un module de gestion des ressources de transmission ou RRM *(Radio Resource Management)* est alors en charge d'allouer de manière statique ou dynamique les ressources de transmission aux différentes cellules. Il est notamment connu de réutiliser des fréquences de transmission selon un schéma prédéterminé *(Frequency Reuse Pattern)*.

Cette gestion des ressources de transmission est toutefois peu efficace dans les réseaux à forte densité, les réseaux hétérogènes ou les réseaux M2M (machine à machine). Par réseau hétérogène, on entend la superposition d'un premier réseau cellulaire à faible granularité spatiale avec au moins un second réseau cellulaire de forte granularité spatiale (constitué de femto-cellules ou de pico-cellules). Le premier réseau cellulaire est alors dénommé macro-cellulaire par opposition au second réseau.

L'allocation de ressources orthogonales dans les réseaux précités aboutirait en effet à une exploitation insuffisante de ces ressources et à une faible efficacité spectrale. Il en résulte que les communications relatives à des utilisateurs appartenant à des cellules voisines, ou à des cellules de niveaux hiérarchiques différents dans un réseau hétérogène, subissent généralement une interférence intra-bande *(in band interference).*

Pour une communication donnée, dite ici première communication, on appelle communément interférence intra-bande l'interférence induite par une seconde communication utilisant la même ressource de transmission que la première. Par opposition, on appelle interférence inter-bande celle induite par une seconde communication utilisant une ressource de transmission distincte (par exemple une fréquence de transmission voisine ou un autre intervalle de transmission) de celle utilisée par la première.

Un réseau dans lequel l'interférence intra-bande est prédominante par rapport au bruit thermique est dit « limité par l'interférence » *(interference limited network)* dans la mesure où les capacités des différentes liaisons du réseau sont davantage contraintes par l'interférence que par le bruit lui-même.

Le traitement et la réduction de l'interférence intra-bande ont fait l'objet de nombreuses recherches.

La méthode de traitement la plus simple est de considérer l'interférence comme un simple bruit thermique. Cette méthode de traitement n'est toutefois acceptable que si le niveau d'interférence est faible. Il est à noter que la plupart des algorithmes d'allocation de puissance *(power allocation)* sont basés sur cette hypothèse.

D'autres méthodes de traitement permettent de réduire l'interférence en décodant le signal d'information de la(ou les) communication(s) interférente(s). Cela suppose que le terminal récepteur considéré connaisse les codes ayant servi à les coder. Parmi ces méthodes, on connaît notamment les schémas de réduction d'interférence de type parallèle ou PIC *(Parallel Interference Canceller)* ou série *(Successive Interference Canceller),* bien connus de l'homme du métier.

Une autre approche classique pour réduire le niveau d'interférence est de mettre en oeuvre une méthode adaptative d'allocation de puissance *(adaptive powercontrol)*. Une telle méthode permet de contrôler les niveaux de puissance des différents terminaux émetteurs de manière à garantir une qualité de service prédéterminée aux différents utilisateurs. Cette qualité de service peut être mesurée selon le cas en termes de débit, de temps de latence, de taux d'erreur paquet, de couverture spatiale, etc. On appelle conventionnellement métrique de qualité de service, le ou les paramètre(s) utilisé(s) pour la mesurer. En règle générale, une communication d'un utilisateur requiert une qualité de service minimale qui est prise en compte ou négociée lors de la procédure d'admission de l'utilisateur dans la cellule. Cette qualité de service minimale s'exprime sous la forme d'une contrainte sur la métrique de qualité de service : latence inférieure à un seuil, débit supérieur à un minimum garanti, etc. L'allocation de puissance est alors effectuée de manière à respecter la contrainte sur la métrique de qualité de service.

Il a été proposé dans les demandes de brevet FR-A-2 963 194 et FR-A-2 963 195 une méthode d'allocation de puissance, centralisée ou distribuée, sous contrainte de qualité de service. Plus précisément, pour une contrainte de qualité de service donnée, cette méthode d'allocation de puissance permet de réduire les puissances d'émission des terminaux en tenant compte de certains régimes d'interférence affectant les différentes communications. Ainsi, selon cette méthode, si l'on considère une première communication entre un premier terminal émetteur et un premier terminal récepteur, interférée par une seconde communication entre un second terminal émetteur et un second terminal récepteur, on distingue pour la première communication trois régimes d'interférence possibles : un premier régime de fort SINR (*signal to noise and interference ratio*), dans lequel le premier récepteur traite le signal de la seconde communication comme du bruit thermique, un second régime de SINR modéré dans lequel le premier récepteur décode conjointement les signaux d'information des première et seconde communications, et enfin un troisième régime de faible SINR dans lequel le premier récepteur décode d'abord le signal d'information de la seconde communication, soustrait sa contribution au signal reçu avant de décoder le signal d'information de la seconde communication à partir du signal ainsi obtenu.

Cette méthode d'allocation de puissance fonctionne bien pour un couple de communications interférentes. Toutefois, pour un plus grand nombre de communications interférentes, la situation devient sensiblement plus complexe. On comprend en effet qu'une allocation de puissance à un émetteur donné influence le diagramme d'interférence des autres communications et peut modifier leurs régimes d'interférence respectifs. Ainsi la modification de puissance d'un émetteur peut conduire à une modification de puissance d'un ou plusieurs autre émetteurs. L'allocation de puissance peut devenir instable et diverger jusqu'à aboutir à une situation où tous les émetteurs concernés transmettent à puissance maximale.

Le but de la présente invention est de proposer une méthode d'optimisation de liaison dans un réseau de télécommunication sans fil, sans modification d'allocation de puissance des différents émetteurs et donc sans perturbation sensible de la situation d'interférence entre les différentes communications.

## EXPOSÉ DE L'INVENTION

L'invention propose à cet égard un procédé d'adaptation de liaison pour système de télécommunication sans fil comprenant un terminal émetteur, un premier terminal récepteur et au moins un second terminal récepteur, une communication du terminal émetteur avec le premier terminal récepteur étant soumise à une première interférence due à au moins une communication avec l'au moins un second terminal récepteur qui utilise les mêmes ressources de transmission, le procédé comprenant :

- la détermination d'un premier schéma de modulation et de codage pour la communication du terminal émetteur avec le premier terminal récepteur qui optimise une fonction d'intérêt,
- pour chaque second terminal récepteur, la détermination d'un second schéma de modulation et de codage qui optimise la fonction d'intérêt sous l'hypothèse que la communication du terminal émetteur est transférée du premier terminal récepteur vers le second terminal récepteur tout en étant soumise à une seconde interférence due à au moins une communication qui utilise lesdites mêmes ressources de transmission ;
- pour assurer la communication avec le terminal émetteur, la sélection, parmi le premier terminal récepteur et l'au moins un second terminal récepteur, du terminal récepteur permettant d'optimiser au mieux la fonction d'intérêt.

Certains aspects préférés mais non limitatifs de procédé sont les suivants :

- il comprend en outre, lorsque le premier terminal récepteur est sélectionné pour assurer la communication du terminal émetteur, une étape de traitement de la première interférence selon un type de traitement associé à un régime d'interférence correspondant au premier schéma de modulation et de codage ;
- il comprend en outre, lorsqu'un second terminal récepteur est sélectionné pour assurer la communication du terminal émetteur, une étape de transfert de la communication du premier terminal émetteur du premier terminal récepteur vers le second terminal récepteur sélectionné, suivie d'une étape de traitement de la seconde interférence selon un type de traitement associé à un régime d'interférence correspondant au second schéma de modulation et de codage ;
- l'étape de transfert de la communication du premier terminal émetteur du premier terminal récepteur vers le second terminal récepteur sélectionné n'est réalisée que si l'écart entre la fonction d'intérêt optimisée obtenue avec le second terminal récepteur et la fonction d'intérêt optimisée obtenue avec le premier terminal récepteur est supérieur à un seuil ;
- la fonction d'intérêt dépend des débits de la communication du terminal émetteur avec le premier terminal récepteur et de l'au moins une communication avec l'au moins un second terminal récepteur;

- la détermination du schéma de modulation et de codage pour la communication du terminal émetteur avec le premier terminal récepteur, respectivement pour la communication du terminal émetteur transférée au second terminal récepteur, est effectuée de manière centralisée par un noeud de contrôle ;
- la détermination du schéma de modulation et de codage pour la communication du terminal émetteur avec le premier terminal récepteur, respectivement pour la communication du terminal émetteur transférée au second terminal récepteur, est effectuée par le premier terminal récepteur, respectivement par le second terminal récepteur, et celui-ci transmet le schéma ainsi déterminé au second, respectivement au premier, terminal émetteur.

## BRÈVE DESCRIPTION DES DESSINS

D'autres aspects, buts, avantages et caractéristiques de l'invention apparaîtront mieux à la lecture de la description détaillée suivante de formes de réalisation préférées de celle-ci, donnée à titre d'exemple non limitatif, et faite en référence aux dessins annexés sur lesquels :

- la figure 1 est un schéma d'un modèle d'interférence intra-bande dans un système de communication cellulaire ;

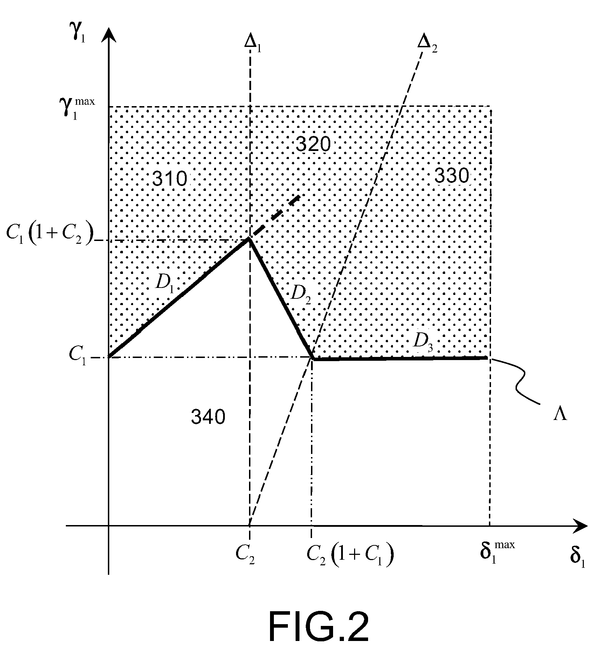

- la figure 2 représente un diagramme d'interférence pour une communication ;
- la figure 3 est un ordinogramme d'un procédé selon un mode de réalisation possible de l'invention.

## EXPOSÉ DÉTAILLÉ DE MODES DE RÉALISATION PARTICULIERS

Nous considérons ici un système de communication sans fil comprenant une pluralité de couples de terminaux émetteur et de terminaux récepteur et supposons qu'une communication entre les terminaux d'un couple peut interférer avec une communication entre les terminaux d'un autre couple, par exemple parce que ces deux communications utilisent des ressources de transmission communes (interférence intra-bande).

Le système de communication sans fil peut être par exemple un réseau de communication cellulaire, un réseau de communication *ad hoc,* un réseau hétérogène comprenant un niveau macro-cellulaire et un niveau femto-cellulaire.

Dans un réseau hétérogène, les communications considérées peuvent être à deux niveaux différents, par exemple l'une au niveau macro-cellulaire et l'autre au niveau femto-cellulaire.

Chacune des communications peut être soit montante *(uplink),* soit descendante *(downlink),* l'expression de terminal émetteur ou de terminal récepteur étant prise dans son acception large et incluant notamment une station de base ou un point d'accès du réseau.

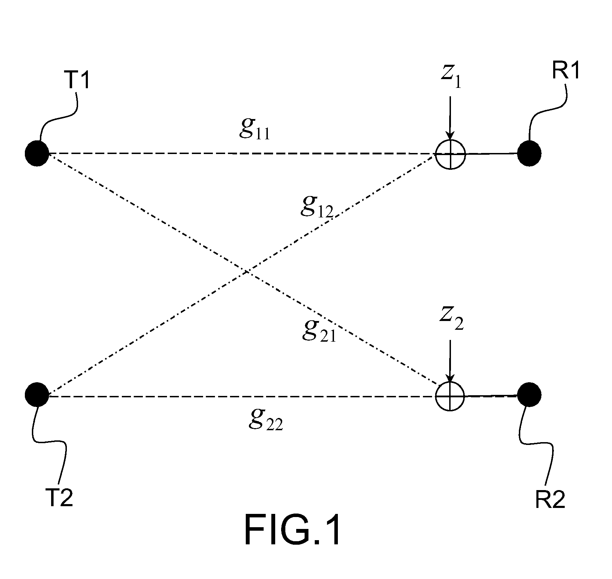

Dans un but de simplification de la présentation, nous nous plaçons tout d'abord dans le cas d'un système ne comportant que deux couples de terminaux, comme illustré sur la figure 1.

Si l'on note $x_1$, $x_2$ les signaux respectivement transmis par les terminaux émetteurs T1 et T2 et $y_1$, $y_2$ les signaux respectivement reçus par les terminaux récepteurs R1 et R2, on a:

$$y_1 = g_{11}x_1 + g_{12}x_2 + z1$$

$$y_2 = g_{22}x_2 + g_{21}x1 + z2 \qquad (1)$$

où $z_1$, $z_2$ sont des échantillons de bruit blanc gaussien, $g_{11}$, $g_{21}$ sont les coefficients de canal entre le terminal émetteur T1 et les terminaux récepteurs R1 et R2, respectivement, et $g_{22}$, $g_{12}$ sont les coefficients de canal entre le terminal émetteur T2 et les terminaux récepteurs R2 et R1, respectivement.

On comprendra que l'interférence entre communications est représentée en (1) par les termes croisés $g_{12}x_2$ et $g_{21}x_1$.

Pour la première communication, entre les premiers émetteur T1 et récepteur R1, les puissances respectives du signal d'information et de l'interférence due à la seconde communication sont respectivement $|g_{11}|^2 P1$ et $|g_{12}|^2 P2$.

De manière similaire, pour la seconde communication entre les seconds émetteur et récepteur, les puissances respectives du signal d'information et de l'interférence due à la première communication sont respectivement $|g_{22}|^2 P2$ et $|g_{21}|^2 P1$.

Le rapport signal à bruit (SNR) au niveau du premier récepteur peut s'exprimer sous la forme :

$$\gamma_1 = |g_{11}|^2 \frac{P1}{N0} \quad (2)$$

De manière similaire, le rapport interférence à bruit au niveau du premier terminal récepteur n'est autre que :

$$\delta_1 = |g_{12}|^2 \frac{P2}{N0} \qquad (3)$$

De la même façon, les rapports signal à bruit et interférence à bruit au niveau du second terminal récepteur peuvent s'écrire respectivement comme :

$$\gamma_2 = |g_{22}|^2 \frac{P2}{N0} \qquad (4)$$

et

$$\delta_2 = |g_{21}|^2 \frac{P1}{N0} \qquad (5)$$

Les relations suivantes sont vérifiées :

$$\delta_1 = f_2\gamma_2 \text{ et } \delta_2 = f_1\gamma_1 \qquad (6)$$

Où

$$f_1 = \frac{|g_{21}|^2}{|g_{11}|^2} \text{ et } f_2 = \frac{|g_{12}|^2}{|g_{22}|^2} \qquad (6')$$

On note dans la suite $\rho_1$ et $\rho_2$ les débits respectifs sur la première et la seconde communication, et l'on introduit les variables $C_1 = 2^{\rho_1} - 1$, $C_2 = 2^{\rho_2} - 1$ et $C_{12} = 2^{\rho+P} - 1$.

Les débits $\rho_1$ et $\rho_2$ s'expriment également comme $\rho_1 = v_1 B$ et $\rho_2 = v_2 B$ où $v_1$ et $v_2$ sont respectivement, l'efficacité spectrale pour la première communication et l'efficacité spectrale pour la seconde communication, exprimées en bits/s/Hz, et où B est la largeur de bande des ressources de transmission communes.

L'efficacité spectrale ciblée pour une liaison dépend du schéma de codage et de modulation ou MCS (*Modulation and Coding Scheme*) utilisée sur cette liaison. De manière générale, l'efficacité spectrale est proportionnelle au taux de codage (*coding rate*) et à l'ordre de modulation choisis pour la transmission sur la liaison en question.

On sait que pour un rapport signal sur bruit plus interférence (SINR) donné sur une liaison, il est possible d'obtenir une bonne qualité de service (QoS), par exemple en termes de taux d'erreur binaire (BER) ou de taux d'erreur paquet (PER), en utilisant un schéma MCS à faible efficacité spectrale et donc un faible taux de codage, ou bien une moindre qualité de service en utilisant un schéma MCS à efficacité spectrale élevée et donc un plus fort débit. De manière générale, le choix du schéma MCS est un compromis entre efficacité spectrale et robustesse de la liaison.

Pour un couple de débits ($\rho_1$ $\rho_2$) donnés, on peut distinguer plusieurs régimes d'interférence, chaque régime donnant lieu à un traitement distinct. Plus précisément, on peut notamment classer l'interférence en trois régimes possibles.

Schématiquement, dans un premier régime, la puissance de l'interférence due à la seconde communication est plus faible que la puissance du signal d'information reçu au niveau du premier terminal récepteur. Plus précisément, si l'on raisonne en termes de capacité au sens de Shannon, le rapport signal sur bruit plus interférence sur le canal direct entre le terminal émetteur T1 et le terminal récepteur R1 permet de passer le débit $\rho_1$ alors que le rapport signal sur bruit sur le canal " croisé " entre le terminal émetteur T2 et le terminal récepteur R1 ne permet pas de passer le débit $\rho_2$ (le canal " croisé " est en situation de coupure au sens de la théorie de l'information), autrement dit :

$$\rho_1 \le log_2(1 + SNR_{11}) = log_2\left(1 + \frac{\gamma_1}{1+\delta_1}\right) \qquad (7)$$

et

$$\rho_2 > log_2(1 + INR_{12}) = log_2(1 + \delta_1) \qquad (8)$$

où $SNR_{11}$ et $INR_{12}$ sont respectivement le rapport signal à bruit plus interférence et le rapport interférence sur bruit au niveau du premier terminal récepteur R1.

Dans ce régime, le signal d'information de la seconde communication ne peut être décodé du fait de la coupure du canal croisé. Il est alors considéré comme du bruit thermique pour le décodage du signal d'information de la première communication.

On en déduit les contraintes suivantes sur le premier régime :

$$\gamma_1 \geq C_1(1 + \delta_1)$$

et

$$\delta_2 < C_2 \qquad (10)$$

A l'inverse, dans un troisième régime, la puissance de l'interférence est sensiblement supérieure à celle du signal d'information reçu par le premier terminal récepteur. Etant donné que l'interférence est due à la seconde communication, il est proposé de décoder d'abord le signal d'information de la seconde communication, d'estimer l'interférence due à cette communication et de la soustraire du signal reçu. Le signal d'information de la première communication est ensuite décodé du signal résultant, débarrassé de l'interférence.

Dans ce régime, on considère dans une première étape le signal de la première communication comme du bruit thermique et on décode le signal d'information de la seconde communication. On se retrouve par conséquent dans une situation symétrique de celle du premier régime et l'expression (7) est à remplacer par :

$$\rho_2 \leq log_2(1 + SNR_{12}) = log_2\left(1 + \frac{\delta_1}{1+\gamma_1}\right) \qquad (11)$$

où $SNR_{12}$ est le rapport " signal sur bruit " au niveau du terminal récepteur R1 dans lequel on entend le signal comme le signal d'information de la seconde communication.

Dans une seconde étape, une fois la contribution de la seconde communication soustraite du signal reçu, on se retrouve dans le cas d'un signal simplement bruité par un bruit thermique, autrement dit :

$$\rho_1 \leq log_2(1 + SNR_{11}) = log_2(1 + \gamma_1) \qquad (12)$$

où $SNR_{11}$ est le rapport signal sur bruit après élimination de l'interférence due à la seconde communication.

Les expressions (11) et (12) se traduisent par les contraintes suivantes sur $\gamma_1$ et

$$\delta_1 : \gamma_1 \leq \frac{\delta_1}{c_2} - 1 \qquad (13)$$

et

$$\gamma_1 \geq C_1 \qquad (14)$$

Enfin, dans un second régime, la puissance de l'interférence est du même ordre que celle du signal d'information. Il est alors proposé de décoder conjointement le signal d'information de la première communication et le signal d'information de la seconde communication au niveau du premier terminal récepteur. Le décodage conjoint des deux signaux d'information pourra, par exemple, être effectué au moyen d'un schéma PIC ou d'une méthode de décodage à maximum de vraisemblance de type MMSE-GDFE (*Minimum Mean Square Error - Generalized Décision Feedback Equalizer)*, de manière connue en soi.

Ce régime d'interférence est intermédiaire entre le premier et le troisième dans la mesure où le débit $\rho_2$ ne vérifie plus (8) et (11), autrement dit :

$$log_2\left(1 + \frac{\delta_1}{1+\gamma_1}\right) < \rho_2 \leq log_2(1 + \delta_1) \qquad (15)$$

En revanche, le décodage conjoint suppose que les débits des première et seconde communications puissent être acheminés par le canal composé par le canal direct et le canal croisé, c'est-à-dire :

$$\rho_1 + \rho_2 \leq log_2(1 + \gamma_1 + \delta_1) \quad (16)$$

On déduit de (15) et (16) les contraintes sur $\gamma_1$ et $\delta_1$ relatives au second régime :

$$C_2 \leq \delta_1 \leq C_2(1 + \gamma_1) \qquad (17)$$

et

$$\gamma_1 \geq C_{12} - \delta_1 \qquad (18)$$

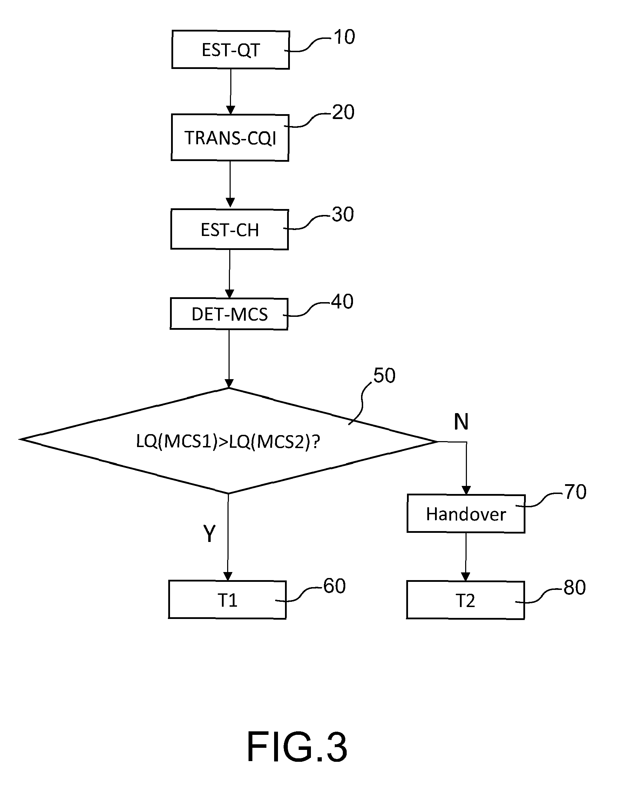

La figure 3 est un diagramme d'interférence dans lequel on a représenté en abscisses le rapport interférence sur bruit $\delta_1$ et en ordonnées le rapport signal sur bruit $\gamma_1$. Ce diagramme est obtenu pour des valeurs données de débit $\rho_1$ et $\rho_2$, et par conséquent pour des valeurs données de $C_1$, $C_2$ et $C_{12}$.

Le rapport $\gamma_1$ varie de 0 à $\gamma_1^{max} = |g_{11}|^2 P_1^{max}/N0$ et le rapport $\delta_1$ varie de 0 à $\delta_1^{max} = |g_{12}|^2 P_2^{max}/N0$ où $P_1^{max}$ et $P_2^{max}$ sont respectivement la puissance d'émission maximale des terminaux T1 et T2.

Les droites $\Delta_1$ et $\Delta_1$ définies par les équations $\delta_1 = C_2$ *(cf.* (10)) et $\gamma_1 = \frac{\delta_1}{C_2} - 1$ *(cf.* (13)) délimitent les trois régimes d'interférences.

Les droites $D_1$, $D_2$, $D_3$, respectivement définies par les équations $\gamma_1 = C_1(1 + \delta_1)$ *(cf.* (9)) ; $\gamma_1 = C_{12} - \delta_1$ *(cf.* (18)) ; $\gamma_1 = C_1$ *(cf.* (14)) donnent la frontière inférieure de puissance, notée A, pour chacun de ces régimes.

La zone 310 correspondant au premier régime d'interférence est délimitée par les droites D1 et $\Delta_1$ ainsi que l'axe des ordonnées, celle 320 correspondant au deuxième régime d'interférence est délimitée par les droites $\Delta_1$ et $D_2$, et enfin celle 330 correspondant au troisième régime d'interférence est délimitée par les droites $\Delta_2$ et $D_3$.

Au-dessous de la frontière inférieure A se trouve une quatrième zone 340 dans laquelle il n'est pas possible de traiter l'interférence pour la qualité de service demandé, ici pour les débits $\rho_1$ et $\rho_2$.

Si le débit de la première ou de la seconde communication varie, par exemple du fait du schéma de modulation et de codage MCS retenu, les paramètres des équations des droites $D_1$, $D_2$, $D_3$, $\Delta_1$ et $\Delta_2$ varient. Pour des débits $\rho_1$, $\rho_2$ donnés, on peut déterminer à partir d'une estimation au niveau du récepteur, de la puissance du signal d'information, de la puissance de l'interférence et de celle du bruit thermique, dans quel régime d'interférence on se trouve, et effectuer le traitement afférent à cette zone.

On a décrit dans ce qui précède une classification d'interférence selon trois régimes. L'invention n'est toutefois pas limitée à un tel nombre de régimes, mais s'étend au contraire à tout nombre de régimes, en particulier à une classification selon cinq régimes telle que par exemple décrite dans l'article de R.H. Etkin et al. intitulé "Gaussian interference channel capacity to within one bit," IEEE Trans. Info. Theory, vol. 54, no. 12, pp. 5534-5562, Décembre 2008, ou encore à une classification selon deux régimes ne considérant pas le régime central 320 à décodage conjoint du signal et de l'interférence comme par exemple utilisée dans le procédé faisant l'objet de la demande de brevet EP 2 763 340 A1.

On a par ailleurs décrit dans ce qui précède le cas de deux couples de terminaux et une situation d'interférence intra-bande de la communication du premier couple du fait de la communication du second couple. Ce cas se généralise à un nombre quelconque K de couples de terminaux et donc à un nombre K de communications correspondantes. Le diagramme d'interférence de la figure 3 pour la communication entre le terminal émetteur et le terminal émetteur du premier couple est alors construit en considérant le rapport signal à bruit de cette communication et le rapport interférence à bruit résultant des K-1 communications interférentes (ou encore les rapports interférence à bruit résultant de chacune des K-1 communications précédentes).

Considérant le premier couple de terminaux, on peut chercher à identifier un point de fonctionnement du terminal récepteur qui optimise une fonction d'intérêt par exemple représentative de la qualité de la liaison perçue par le récepteur, ce point de fonctionnement correspondant à une zone du diagramme d'interférence et donc à un type de traitement de l'interférence. Par optimisation de la fonction d'intérêt, on entend l'identification d'un point de fonctionnement permettant d'atteindre un objectif quantitatif. Il s'agit par exemple d'un point de fonctionnement permettant d'atteindre un extremum de la fonction d'intérêt (l'optimisation étant alors du type maximisation ou minimisation). Une telle fonction d'intérêt est dénommée « fonction objectif » dans le domaine de l'optimisation mathématique où elle sert de critère pour déterminer la meilleure solution à un problème d'optimisation. Concrètement, elle associe une valeur à une instance d'un problème d'optimisation. Le but du problème d'optimisation est alors de minimiser ou de maximiser cette fonction jusqu'à l'optimum.

Les paramètres influençant le fonctionnement du terminal récepteur sont les suivants :

- $P_{signal}$ : la puissance du signal d'information ;
- $P_{inter}$ : la puissance de l'interférence ;
- $tx_{mode}$ : ce paramètre regroupe tous les paramètres du schéma de modulation et codage utilisé dans le cadre d'un codage/modulation adaptatif AMC (*Adaptive Modulation and Coding*), tels que taux de codage et le type de modulation ;
- canal : ce paramètre regroupe tous les événements qui affectent les liaisons de transmission et qui ne sont pas déjà considérés par les paramètres précédents; on y retrouve l'évanouissement, le masquage, la perte de trajet, le gain de l'antenne, etc. Le canal considéré comprend à la fois le canal portant le signal utile et les canaux portant les signaux interférents.

Ainsi, la fonction d'intérêt LQ peut s'exprimer selon :

$$LQ = f(P_{signal}, P_{inter}, tx_{mode}, canal), \text{ ou encore } LQ = f(SNR, INRs, tx_{mode}),$$

où SNR représente le rapport signal à bruit de la communication entre les terminaux du premier couple et où INRs représentent les rapports interférence à bruit résultant des K-1 communications interférentes.

On a vu qu'une modification d'allocation de puissance vient perturber la situation d'interférence entre les différentes communications et donc l'équilibre global du système. Ainsi, dans le cadre de l'invention, on ne cherche pas à modifier les puissances d'émissions données (les puissances $P_{data}$ et $P_{inter}$ sont ainsi figées), mais on vient modifier le paramètre $tx_{mode}$ afin d'identifier un point de fonctionnement du récepteur qui optimise la fonction d'intérêt LQ. En d'autres termes, le contexte global d'interférence (qui se traduit par les rapports SNR et INRs) n'est pas modifié, mais on adapte le schéma de modulation et de codage au niveau local sans que cela ne vienne impacter les autres communications. On cherche ainsi à optimiser la fonction d'intérêt pour un ensemble de rapports SNR, INRs donnés.

A titre d'exemples de fonction d'intérêt LQ, on peut utiliser une fonction d'intérêt représentative d'une efficacité spectrale et qui dépend conjointement des débits des différentes communications exploitant les mêmes ressources de transmission (débits $\rho_1$, $\rho_2$ dans le cas de deux couples de terminaux). Par exemple, on peut chercher à maximiser la somme des débits (*Sum Rate Maximization*) ou bien garantir un débit minimal ou des débits proportionnels à la qualité de liaison. On peut également utiliser une fonction d'intérêt représentative d'une efficacité énergétique et qui dépend conjointement de la consommation des différentes communications (on cherche alors à réduire le coût énergétique). La fonction d'intérêt peut également être une métrique représentative du champ électromagnétique produit par l'un et/ou l'autre des terminaux, lorsque l'on cherche par exemple à minimiser le niveau de radiation auquel l'utilisateur par exemple du terminal émetteur est exposé. Un autre exemple de fonction d'intérêt est une fonction représentative de la latence (par exemple le temps d'attente pour la transmission des paquets) lorsque l'on cherche à minimiser le délai de service. Et bien entendu, la fonction d'intérêt peut être une combinaison de plusieurs métriques, lorsque l'on cherche à réaliser une optimisation multicritères.

Revenant à la figure 1, l'invention porte sur un procédé d'adaptation de liaison pour système de télécommunication sans fil comprenant un terminal émetteur T1, un premier terminal récepteur R1 et au moins un second terminal récepteur R2. Une communication du terminal émetteur T1 avec le premier terminal récepteur R1 est soumise à une première interférence due à au moins une communication qui utilise les mêmes ressources de transmission (interférence intra-bande). Dans l'exemple de la figure 1, la communication interférente correspond à la communication entre le second terminal émetteur T2 et le second terminal récepteur R2. Mais d'une manière générale, l'invention s'étend au cas de plusieurs communications interférentes utilisant les mêmes ressources de transmission que la communication entre le terminal émetteur T1 et le premier terminal récepteur R1.

Le procédé comprend une étape de détermination d'un premier schéma de modulation et de codage $MCS_1$ pour la communication du terminal émetteur T1 avec le premier terminal récepteur (R1) qui optimise la fonction d'intérêt LQ.

Le premier schéma de modulation et de codage $MCS_1$ ainsi déterminé permet d'identifier un premier régime d'interférence dans un diagramme d'interférence pour le premier terminal récepteur R1 assurant la communication avec le terminal émetteur T1 et soumis à la première interférence, et donc un type de traitement de la première interférence.

Le procédé comporte par ailleurs, pour chaque second terminal récepteur R2, une étape de détermination d'un second schéma de modulation et de codage $MCS_2$ qui optimise la fonction d'intérêt sous l'hypothèse que la communication du terminal émetteur T1 serait transférée du premier terminal récepteur R1 vers le second terminal récepteur R2 tout en étant soumise à une seconde interférence due à au moins une communication qui utilise lesdites mêmes ressources de transmission. En d'autres termes, on effectue un transfert virtuel de la communication du terminal émetteur T1 du premier terminal récepteur R1 vers le second terminal récepteur R2 afin d'évaluer comment la fonction d'intérêt pourrait être optimisée si ce transfert était réellement effectué.

Dans le cas de deux couples de terminaux illustré par la figure 1, la seconde interférence correspond à une communication avec le premier terminal récepteur qui utilise lesdites mêmes ressources de transmission.

Dans le cas où l'on considère deux ou plus second terminaux récepteurs, la seconde interférence correspond à une communication avec le premier terminal récepteur qui utilise lesdites mêmes ressources de transmission et à une ou plus communication avec un ou plus autre second terminal récepteur qui utilises lesdites mêmes ressources de transmission.

Le second schéma de modulation et de codage $MCS_2$ ainsi déterminé permet d'identifier un second régime d'interférence dans un diagramme d'interférence pour le second terminal récepteur R2 assurant la communication avec le terminal émetteur T1 et soumis à la seconde interférence, et donc un type de traitement de la seconde interférence.

Puis le procédé comprend une étape de sélection, parmi le premier terminal récepteur R1 et l'au moins un second terminal récepteur R2, du terminal récepteur R1 ou R2 permettant d'obtenir la fonction d'intérêt la plus optimisée pour assurer la communication avec le terminal émetteur T1. On adopte ainsi le premier ou le second schéma de modulation et de codage déterminé, selon que le premier ou terminal récepteur est sélectionné.

On vient ainsi cibler un régime d'interférence le plus approprié, à savoir celui qui optimise la fonction d'intérêt pour un ensemble de rapports SNR, INRs donnés. Ce régime correspond au premier régime (lié au premier schéma de modulation et de codage) ou au second régime (lié au second schéma de modulation et de codage) selon que le premier terminal R1 ou le second terminal R2 est sélectionné pour assurer la communication avec le terminal émetteur T1.

Ainsi, lorsque le premier terminal récepteur est sélectionné pour assurer la communication du terminal émetteur, une étape de traitement de la première interférence est mise en oeuvre selon un type de traitement associé au premier régime d'interférence correspondant au premier schéma de modulation et de codage $MCS_1$.

Lorsque qu'un second terminal récepteur est sélectionné pour assurer la communication du terminal émetteur, une étape de transfert de la communication du premier terminal émetteur du premier terminal récepteur vers le second terminal récepteur sélectionné est mise en oeuvre, suivie d'une étape de traitement de la seconde interférence selon un type de traitement associé au second régime d'interférence correspondant au second schéma de modulation et de codage $MCS_2$.

Dans un mode de réalisation possible, l'étape de transfert de la communication du premier terminal émetteur du premier terminal récepteur vers le second terminal récepteur sélectionné n'est réalisée que si l'écart entre l'optimisation de la fonction d'intérêt obtenue avec le second terminal récepteur et l'optimisation de la fonction d'intérêt obtenue avec le premier terminal récepteur est supérieur à un seuil. Ce seuil vise à s'assurer que le gain de performance lié à la réalisation du transfert est suffisamment important, par exemple pour couvrir le coût du transfert ou encore respecter des contraintes d'efficacité énergétique.

Dans un autre mode de réalisation possible, le régime d'interférence correspondant au schéma de modulation et de codage retenu peut ne pas être accepté. A titre d'exemple, on peut chercher à éviter le régime central de la classification à trois régimes dont le traitement associé s'avère en effet relativement complexe et donc consommateur de ressources de calcul. Un critère possible pour décider d'accepter ou non de fonctionner dans un régime d'interférence donné peut consister à vérifier si un point de fonctionnement du terminal récepteur concerné (par exemple le niveau de charge de sa batterie, ou encore la quantité de ressources de calcul déjà exploitées pour d'autres activités) ou d'un équipement tiers (comme par exemple un équipement sur qui la charge de calcul peut être en tout ou partie déchargée) dépasse ou non un seuil. Si le régime d'interférence correspondant au schéma de modulation et de codage retenu n'est pas accepté, un régime voisin est retenu.

Dans le cadre de ce mode de réalisation, avant traitement de l'interférence selon un type de traitement associé à un régime d'interférence correspondant au schéma de modulation et de codage retenu, le procédé comporte une étape de modification du diagramme d'interférence pour la première communication consistant à modifier les frontières entre les zones 310, 320, 330 correspondant aux différents régimes, par exemple en vue de diminuer la superficie de la zone 320 correspondant au régime central. L'ampleur de la modification peut être fonction de la valeur du point de fonctionnement du terminal récepteur ou de l'équipement tiers. A titre d'exemple, la superficie de la zone centrale 320 est d'autant plus limitée que le niveau de charge de la batterie du terminal est faible. Bien entendu , cette étape est mise en oeuvre pour le diagramme d'interférence de la communication avec le premier terminal récepteur en absence de transfert de la communication, et pour le diagramme d'interférence de la communication avec le second terminal récepteur en cas de transfert de la communication.

On comprend de ce qui précède que l'invention propose un mécanisme de prise de décision de transfert d'une communication d'un premier terminal récepteur vers un second terminal récepteur qui permet de limiter les effets indésirables des interférences affectant les communications entre points d'accès et terminaux utilisateurs (tant en liaison montante que descendante), et ce sans imposer de modifications à l'allocation de puissance.

En supposant que le motif d'interférence perçu par un terminal utilisateur (terminal émetteur T1) est connu, c'est-à-dire que tous les ratios interférence à bruit INRs dus aux communications interférentes sont connus, l'invention propose d'exploiter la diversité de points d'accès (le premier terminal récepteur R1 et l'au moins un second terminal récepteur R2) auquel le terminal utilisateur T1 peut être assigné.

Chaque terminal récepteur R1, R2 offre un rapport signal à bruit SNR différent, puisqu'il dépend de la puissance alloué à ce terminal et du canal entre ce terminal et le terminal émetteur. L'invention assigne le terminal émetteur T1 au terminal récepteur R1, R2 qui permet d'optimiser la fonction d'intérêt LQ. Si le terminal récepteur optimal diffère de celui auquel le terminal émetteur T1 est assigné par défaut (le premier terminal récepteur R1), un transfert (*handover*) de la communication peut être réalisé.

L'invention est basée sur les hypothèses suivantes :

- l'ancien et le nouveau point d'accès utilisent les mêmes ressources de transmission ;
- l'ancien point d'accès utilise toujours ces mêmes ressources de transmission après le transfert puisqu'il était responsable d'interférence intra-bande dans les cellules voisines avant le transfert et qu'il doit toujours être la cause de la même interférence intra-bande après le transfert afin de ne pas affecter le contexte global d'interférence ;
- le nouveau point d'accès est sélectionné parmi une liste de point d'accès qui utilisent ces mêmes ressources de transmission avant le transfert, car dans le cas contraire il serait source d'une nouvelle interférence intra-bande qui viendrait affecter le contexte global d'interférence.

On a vu précédemment que le procédé selon l'invention se généralise à K couples de terminaux. Ce nombre pouvant être important, on peut opter pour une solution sous-optimale mais plus simple à mettre en oeuvre consistant à considérer l'interférence d'un ensemble de couples comme du bruit thermique. L'interférence d'un second terminal émetteur est ainsi traitée comme une source de bruit.

Par exemple, pour un couple donné, on peut considérer que tous les communications de tous les autres couples, à l'exception d'un ou plusieurs couple (par exemple ceux les plus proches, ceux induisant le plus fort niveau d'interférence ou encore ceux permettant d'optimiser au mieux la fonction d'intérêt), sont faiblement interférentes et on décide de les traiter comme du bruit thermique. Ces autres communications n'influent donc pas sur le choix de transférer au non la communication, et sur le type de traitement de l'interférence.

A contrario, on peut considérer qu'en complément de l'interférence considérée dans la classification qui possède des caractéristiques propres que l'on exploite pour la traiter et la supprimer, l'interférence d'un ensemble de couples correspond non pas à du bruit thermique mais à de l'interférence qui rentre donc en considération dans le processus de décision de transfert de la communication vers un terminal interférent.

La figure 3 représente de manière schématique un procédé d'adaptation de liaison selon un mode de réalisation possible de l'invention. Dans ce mode de réalisation, l'adaptation de liaison est effectuée de manière centralisée dans un noeud de contrôle, qui peut être un noeud du réseau (terminal d'utilisateur, station de base, noeud *ad hoc*).

Dans la première étape « EST-QT » 10, pour chaque liaison entre un terminal émetteur et un terminal récepteur, le terminal récepteur estime la qualité de ladite liaison. Différentes métriques peuvent être utilisées à cet effet. Par exemple, la qualité de liaison peut être estimée en termes de rapport sur bruit plus interférence (SINR) ou bien à l'aide d'une métrique exponentielle de SINR efficace, dite exp-ESM, plus adaptée aux canaux non-ergodiques, ou encore à l'aide d'une métrique basée sur l'information mutuelle instantanée ou sur les taux de vraisemblance logarithmiques (LLR pour *Log-Likelihood Ratio*) en sortie d'un décodeur à sorties souples. Le rapport SINR ou exp-ESM peut être mesuré de manière connue en soi au moyen d'une séquence pilote transmise par le terminal émetteur sur ladite liaison.

Cette estimation peut être une estimation à court terme (par exemple sur la base du temps de cohérence du canal), une estimation à long terme (par exemple en moyennant les informations relatives à l'interférence sur un horizon temporel donné), ou encore une estimation statistique (exploitant par exemple une connaissance a priori de l'interférence, où une cartographie de l'interférence expérimentée dans une région peut par exemple être utilisée comme une table de correspondance).

A l'étape suivante « TRANS-CQI » 20, chaque terminal récepteur transmet au noeud de contrôle un indicateur de la qualité de la liaison estimée à l'étape précédente. Cet indicateur ou CQI (*Channel Quality Indicator*) est généralement obtenu à l'aide d'une table de correspondance associant chaque niveau de SINR (en dB) à un indice de CQI avec un pas donné (de l'ordre de 2 dB). A chaque indice de CQI est associé en outre un schéma MCS (et donc une efficacité spectrale donnée). Plus l'indice de CQI est élevé, meilleure est la liaison et donc plus l'ordre de la modulation du schéma MCS peut être élevé (d'où une efficacité spectrale plus élevée). L'indice de CQI peut être transmis avec une périodicité prédéterminée pour prendre en compte l'évolution de la qualité des liaisons dans le temps.

Au cours d'une étape « EST-CH » 30, chaque terminal récepteur effectue une estimation de canal pour estimer les coefficients du canal direct et du canal croisé. Plus précisément, lorsqu'une première communication est interférée par une seconde communication, le premier récepteur détermine les coefficients de canal $g_{11}$ et $g_{12}$ et le second récepteur détermine les coefficients de canal $g_{22}$ et $g_{21}$. Ces coefficients de canal sont transmis au noeud de contrôle.

A l'étape « DET-MCS » 40, le noeud de contrôle dispose de l'ensemble des indices de CQI des différentes liaisons, autrement dit d'une cartographie de la qualité des liaisons du système. Le noeud de contrôle vient alors déterminer les schémas de modulation et de codage $MCS_1$, $MC_2$ qui optimisent la fonction d'intérêt pour respectivement la communication du terminal émetteur avec le premier terminal récepteur soumise à la première interférence, et la communication du terminal émetteur virtuellement transférée du premier terminal récepteur au second terminal récepteur et soumise à la seconde interférence.

A l'étape 50, il est vérifié si la fonction d'intérêt serait plus optimale si l'on adoptait le premier schéma de modulation $MCS_1$ plutôt que si l'on transférait la communication vers le second terminal récepteur et que l'on adoptait le second schéma de modulation $MCS_2$.

Dans l'affirmative (« Y »), une étape « T1 » 60 est mise en oeuvre pour mettre en oeuvre le premier schéma de modulation et de codage $MCS_1$ et traiter la première interférence selon le type de traitement associé au régime d'interférence correspondant à ce premier schéma de modulation et de codage $MCS_1$.

Dans la négative (« N »), il est procédé à une étape « Handover » 70 de transfert de la communication vers le second terminal récepteur puis à une étape « T2 » 80 de mise en oeuvre du second schéma de modulation et de codage $MCS_2$ et de traitement de la seconde interférence selon le type de traitement associé au régime d'interférence correspondant à ce second schéma de modulation et de codage $MCS_2$.

Dans un autre mode de réalisation, l'adaptation de liaison n'est pas effectuée de manière centralisée mais au contraire de manière décentralisée par l'un des terminaux qui prend ainsi la décision de réaliser ou non le transfert de la communication vers le second terminal récepteur. Ce terminal reçoit pour cela les indicateurs CQI et les coefficients de canal de la part des premier et second terminaux récepteurs.

Par exemple, la détermination du schéma de modulation et de codage pour la communication du terminal émetteur avec le premier terminal récepteur, respectivement pour la communication du terminal émetteur transférée au second terminal récepteur, est effectuée par le premier terminal récepteur, respectivement par le second terminal récepteur, et celui-ci transmet le schéma ainsi déterminé au second, respectivement au premier, terminal émetteur.

**Revendications**

1.  Procédé d'adaptation de liaison pour système de télécommunication sans fil comprenant un terminal émetteur (T1), un premier terminal récepteur (R1) et au moins un second terminal récepteur (R2), une communication du terminal émetteur avec le premier terminal récepteur étant soumise à une première interférence due à au moins une communication avec l'au moins un second terminal récepteur qui utilise les mêmes ressources de transmission, le procédé comprenant :

    - la détermination d'un premier schéma de modulation et de codage pour la communication du terminal émetteur (T1) avec le premier terminal récepteur (R1) qui optimise une fonction d'intérêt,
    - pour chaque second terminal récepteur (R2), la détermination d'un second schéma de modulation et de codage qui optimise la fonction d'intérêt sous l'hypothèse que la communication du terminal émetteur (T1) est transférée du premier terminal récepteur (R1) vers le second terminal récepteur (R2) tout en étant soumise à une seconde interférence due à au moins une communication qui utilise lesdites mêmes ressources de transmission ;
    - pour assurer la communication avec le terminal émetteur, la sélection, parmi le premier terminal récepteur (R1) et l'au moins un second terminal récepteur (R2), du terminal récepteur permettant d'optimiser au mieux la fonction d'intérêt avec adoption, respectivement, du premier ou du second schéma de modulation et de codage déterminé.

2.  Procédé selon la revendication 1, comprenant en outre, lorsque le premier terminal récepteur (R1) est sélectionné pour assurer la communication du terminal émetteur, une étape de traitement de la première interférence selon un type de traitement associé à un régime d'interférence correspondant au premier schéma de modulation et de codage.

3.  Procédé selon la revendication 2, comprenant avant traitement de la première interférence selon un type de traitement associé à un régime d'interférence correspondant au premier schéma de modulation et de codage, une étape de modification d'un diagramme d'interférence pour la communication du terminal émetteur avec le premier terminal récepteur consistant à modifier des frontières entre différents régimes d'interférence.

4.  Procédé selon l'une des revendications 1 à 3, comprenant en outre, lorsque qu'un second terminal récepteur (R2) est sélectionné pour assurer la communication du terminal émetteur, une étape de transfert de la communication du premier terminal émetteur du premier terminal récepteur (R1) vers le second terminal récepteur (R2) sélectionné, suivie d'une étape de traitement de la seconde interférence selon un type de traitement associé à un régime d'interférence correspondant au second schéma de modulation et de codage.

5.  Procédé selon la revendication 4, dans lequel l'étape de transfert de la communication du premier terminal émetteur du premier terminal récepteur vers le second terminal récepteur sélectionné n'est réalisée que si l'écart entre la fonction d'intérêt optimisée obtenue avec le second terminal récepteur et la fonction d'intérêt optimisée obtenue avec le premier terminal récepteur est supérieur à un seuil.

6.  Procédé selon l'une des revendications 4 et 5, comprenant avant traitement de la seconde interférence selon un type de traitement associé à un régime d'interférence correspondant au second schéma de modulation et de codage, une étape de modification d'un diagramme d'interférence pour la communication du terminal émetteur transférée vers le second terminal récepteur consistant à modifier des frontières entre différents régimes d'interférence.

7.  Procédé selon l'une des revendications 1 à 6, dans lequel l'interférence d'un second terminal émetteur est traitée comme une source de bruit.

8.  Procédé selon l'une des revendications 1 à 7, dans lequel la fonction d'intérêt dépend des débits de la communication du terminal émetteur avec le premier terminal récepteur et de l'au moins une communication avec l'au moins un second terminal récepteur.

9.  Procédé selon l'une des revendications 1 à 8, dans lequel on mesure la qualité de la liaison au premier terminal récepteur et la qualité de la liaison à l'au moins un second terminal récepteur à l'aide d'un rapport signal sur bruit plus interférence ou bien d'une métrique exponentielle de SINR efficace, et l'on en déduit un indice de qualité de ladite liaison.

10. Procédé selon l'une des revendications 1 à 9, dans lequel la détermination du schéma de modulation et de codage pour la communication du terminal émetteur (T1) avec le premier terminal récepteur (R1), respectivement pour la communication du terminal émetteur transférée au second terminal récepteur, est effectuée de manière centralisée par un noeud de contrôle.

11. Procédé selon l'une des revendications 1 à 9, dans lequel la détermination du schéma de modulation et de codage pour la communication du terminal émetteur (T1) avec le premier terminal récepteur (R1), respectivement pour la communication du terminal émetteur transférée au second terminal récepteur, est effectuée par le premier terminal récepteur, respectivement par le second terminal récepteur, et celui-ci transmet le schéma ainsi déterminé au second, respectivement au premier, terminal émetteur.

FIG.1

FIG.2

FIG.3

Europäisches
Patentamt

European
Patent Office

Office européen
des brevets

**RAPPORT DE RECHERCHE EUROPEENNE**

Numéro de la demande

EP 16 15 6172

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2013/260762 A1 (TOMITA TETSUO [JP] ET AL) 3 octobre 2013 (2013-10-03) | 1,10 | INV. H04J11/00 H04W36/00 |
| Y | * abrégé * * alinéas [0006], [0059] - [0065] * ----- | 2-9,11 | |
| Y,D | EP 2 763 340 A1 (COMMISSARIAT L ÉNERGIE ATOMIQUE ET AUX ÉNERGIES ALTERNATIVES [FR]) 6 août 2014 (2014-08-06) * le document en entier * ----- | 2-9,11 | |

DOMAINES TECHNIQUES
RECHERCHES (IPC)

H04J
H04W

Le présent rapport a été établi pour toutes les revendications

| Lieu de la recherche | Date d'achèvement de la recherche | Examinateur |
|---|---|---|
| Munich | 7 juillet 2016 | Bauer, Frédéric |

**EP 3 062 455 A1**

**ANNEXE AU RAPPORT DE RECHERCHE EUROPEENNE
RELATIF A LA DEMANDE DE BREVET EUROPEEN NO.**   EP 16 15 6172

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

07-07-2016

| Document brevet cité au rapport de recherche | Date de publication | Membre(s) de la famille de brevet(s) | Date de publication |
|---|---|---|---|
| US 2013260762 A1 | 03-10-2013 | JP 2013214838 A<br>US 2013260762 A1 | 17-10-2013<br>03-10-2013 |
| EP 2763340 A1 | 06-08-2014 | EP 2763340 A1<br>FR 3001847 A1<br>US 2014219195 A1 | 06-08-2014<br>08-08-2014<br>07-08-2014 |

EPO FORM P0460

Pour tout renseignement concernant cette annexe : voir Journal Officiel de l'Office européen des brevets, No.12/82

17

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2963194 A
- FR 2963195 A
- EP 2763340 A1

**Littérature non-brevet citée dans la description**

- **R.H. ETKIN et al.** Gaussian interference channel capacity to within one bit. *IEEE Trans. Info. Theory,* Décembre 2008, vol. 54 (12), 5534-5562